# EUROPÄISCHE PATENTSCHRIFT

(11) **EP 2 589 212 B1**
(45) Veröffentlichungstag und Bekanntmachung des Hinweises auf die Patenterteilung: **22.11.2017**
(21) Anmeldenummer: 11721054.2
(22) Anmeldetag: 24.05.2011
(51) Int. Cl.: H04M 3/51, H04M 3/42

(54) **VERFAHREN UND SYSTEM ZUM AUFRUFEN VON OPERATIONEN IN EXTERNEN ANWENDUNGEN IN ABHÄNGIGKEIT VON IDENTIFIKATIONSDATEN EINES TELEKOMMUNIKATIONS-TEILNEHMERS**
METHOD AND SYSTEM FOR CALLING OPERATIONS IN EXTERNAL APPLICATIONS ON THE BASIS OF IDENTIFICATION DATA FROM A TELECOMMUNICATION SUBSCRIBER
PROCÉDÉ ET SYSTÈME POUR APPELER DES OPÉRATIONS DANS DES APPLICATIONS EXTERNES EN FONCTION DE DONNÉES D'IDENTIFICATION D'UN ABONNÉ DE TÉLÉCOMMUNICATION

(30) Priorität: 29.06.2010 CH 10462010
(43) Veröffentlichungstag der Anmeldung: 08.05.2013
(73) Patentinhaber: Cetis AG, 5032 Aarau Rohr (CH)
(72) Erfinder: KULL, Willi, CH-6330 Cham (CH)
(74) Vertreter: P&TS SA (AG, Ltd.)
(86) Internationale Anmeldenummer: PCT/EP2011/058448
(87) Internationale Veröffentlichungsnummer: WO 2012/000722

(56) Entgegenhaltungen:
- GB-A- 2 439 363
- US-A1- 2004 119 761
- US-A1- 2009 132 632

## Beschreibung

### Technisches Gebiet

Die Erfindung bezieht sich auf ein computergestütztes Verfahren und System zur Auswahl und zum Aufruf externer Anwendungen in Abhängigkeit von Identifikationsdaten eines Telekommunikations-Teilnehmers entsprechend den unabhängigen Ansprüchen.

### Stand der Technik

Die sogenannte 'Computer Telephony Integration' (CTI) bildet die Verbindung von der Telefonie zur Informatik. Die Basisfunktionen eines CTI-Systems sind das Wählen von Telefonnummern für abgehende Anrufe aus einem Computer-Programm heraus (z.B. durch Mausklick auf die Telefonnummer), wie auch die Anzeige von Informationen über den Anrufer bei ankommenden Anrufen.

Der Nutzen einer CTI-Lösung ist umso grösser, je mehr externe Anwendungen in die CTI-Lösung integriert sind und je enger diese externen Anwendungen mit der CTI-Lösung verknüpft sind. Eine Verknüpfung umfasst beispielsweise die Anzeige des Namens des Anrufers, des aktuellen Umsatzes des Anrufers oder die Möglichkeit, dass der Anrufer als neuer Kunde in einem CRM-System ("Customer relationship management") erfasst wird und die Adresse, Telefonnummer, etc. weitgehend automatisch in die CRM-Maske eingefüllt werden.

Es sind zahlreiche Dokumente bekannt, die sich mit derartigen computergestützten Verfahren für Telefonanlagen beschäftigen. Beispielhaft werden folgende Dokumente genannt.

US200500848085 beschreibt eine Software auf dem Bildschirm einer angerufenen Person mit einer Liste von gespeicherten Dateien, die dem Anrufer zuzuordnen sind und welche auswählbar sind. US6192121 beschreibt ein Anwendungs-Programm-Interface (API), welches ein Interface zwischen Anwendungsprogrammen und einem Telefonserver bereitstellt. US5754636 beschreibt ein graphisches Interface, um einer angerufenen Person die Möglichkeit zu geben, eine Informationsdatenbank, die zur anrufenden Partei gehört, auszuwählen.

Diese Dokumente beschäftigen sich jedoch nicht mit mehreren externen Anwendungen und deren spezifischen Datensätzen, auf die der Benutzer zurückgreifen möchte. Wenn aus einer heute üblichen CTI-Lösung eine externe Anwendung (z.B. CRM) aufgerufen wird, wird der aufgerufenen externen Anwendung die Telefonnummer übergegeben, damit die externe Anwendung den entsprechenden Datensatz (z.B. Datensatz der anrufenden Person) anzeigen kann. Da oft mehrere Personen ab der gleichen Telefonnummer anrufen (z.B. wenn nach aussen die Hauptnummer des Unternehmens angezeigt wird), ist nicht immer klar, welcher Datensatz (für welchen Kontakt) angezeigt werden soll. Je nach Implementierung der CTI-Anbindung an die externe Anwendung zeigt die externe Anwendung zufällig den richtigen oder den falschen Datensatz an. Es ist auch denkbar, dass die externe Anwendung dem Benutzer eine Auswahl der zur Telefonnummer passenden Datensätze anbietet. Bei manchen externen Anwendung ist es standardmässig möglich, die Anzeige eines bestimmten Datensatzes von aussen (z.B. aus einer CTI-Lösung) anzustossen. Um jedoch dem Benutzer eine Auswahl von Datensätzen vorzulegen, müsste in der externen Anwendung eine Software-Erweiterung vorgenommen werden.

US2009/132632 betrifft ein System, in dem bei einem Anruf auf eine Datenbank zugegriffen wird und die Kommunikationsgeschichte und andere Kontaktdaten des Anrufenden angezeigt werden. Durch Auswahl können einzelne Daten eingesehen werden.

US2004/0119761 betrifft die komplette Darstellung von Kontaktdaten einschliesslich der Geschichte auf einer Seite. Einzelne Aufgaben (Email, etc.) könne direkt aufgerufen werden.

### Darstellung der Erfindung

Es ist entsprechend ein Ziel der Erfindung, dem Benutzer alle externen Anwendungen anzuzeigen, in welchen die gegebene Telefonnummer definiert ist.

Es ist ein anderes Ziel, pro externe Anwendung alle Kontakte zu zeigen, in welchen die gegebene Telefonnummer definiert ist.

Es ist ein anderes Ziel der Erfindung, dem Benutzer eine Auswahl aller zu einem bestimmten Anruf und/oder zu einem bestimmten Kontakt zur Verfügung stehenden Operationen aufzuzeigen.

Es ist ein weiteres Ziel der Erfindung, Herstellern von externen Anwendungen zu ermöglichen, Telefon-Systeme auf einfache Art mit der CTI-Software zu verbinden.

Diese Ziele werden mit den Merkmalen der unabhängigen Ansprüche erreicht. Weitere vorteilhafte Ausführungsformen sind in den Unteransprüchen angegeben.

Vorteilhaft ermöglicht die vorliegende Erfindung das Einbinden von externen Anwendungen auf eine Art, so dass keine (oder nur wenig) Änderungen in der externen Anwendung gemacht werden müssen und keine spezielle Datenpflege weder in den externen Anwendungen noch in der CTI-Software nötig ist. Der erfinderische Auswahl-Manager gibt dem Anwender in einem einzigen Fenster eine anwendungsübergreifende Übersicht, in welchen Kontakten welcher externen Anwendung gegebene Identifikationsdaten (Telefonnummer, SIP-Adresse, E-Mail, etc.) bekannt sind, und welche Operationen sich durchführen lassen.

Weiter ist es mit dem erfindungsgemässen Zuordnungsmanager möglich, eine neue Verknüpfung zwischen den Identifikationsdaten des anrufenden Teilnehmers und einer externen Anwendung anzulegen. Damit kann einerseits verhindert werden, dass ein Duplikat eines in dieser externen Anwendung bereits bestehenden Kontakts erstellt wird, und andererseits können beim Erstellen des neuen Kontaktes eventuell Kontaktdaten aus anderen externen Anwendungen übergeben werden. Auch diese Funktionen benötigen keine (oder nur wenig) Änderungen in der externen Anwendung.

Vorteilhaft funktioniert das beschriebene erfindungsgemässe Verfahren in gleicher Weise auch bei Anrufen auf dem Mobilfunknetz, sofern die Identifikationsdaten des Anrufenden vom Mobilfunkanbieter an den CTI-Server übermittelt werden.

Vorteilhaft funktioniert das beschriebene erfindungsgemässe Verfahren in gleicher Weise auch bei Anrufen auf einem Telefonnetz, bei dem die Teilnehmervermittlung ausgelagert ist (wie z.B. bei "IP Centrex"), sofern die Identifikationsdaten des Anrufenden vom Telefonnetz-Anbieter an den CTI-Server übermittelt werden.

### Kurze Beschreibung der Figuren

Die Erfindung wird anhand der beigefügten Figuren näher erläutert, wobei
- **Fig. 1**: eine schematische Übersicht des Gesamtsystems der Erfindung zeigt;
- **Fig. 2**: die Kontakt- und andere Daten in der Datenbank darstellt;
- **Fig. 3a**: in einem Anruf-Journal registrierte Anrufe beispielhaft darstellt;
- **Fig. 3b**: schematisch in einem Anruf-Journal für einen Anruf die konfigurierte Verknüpfung von drei Symbolen mit sechs Operationen für vier externe Anwendungen darstellt;
- **Fig. 4**: das Fenster, welches bei einem ankommenden Anruf eingeblendet wird, darstellt;
- **Fig. 5**: das Dialogfenster des erfindungsgemässen Auswahlmanagers darstellt;
- **Fig. 6**: das indirekte Öffnen der Kontaktmaske einer externen Anwendung darstellt;
- **Fig. 7**: eine beispielhafte Darstellung des Zuordnungsmanagers darstellt;
- **Fig. 8**: eine schematische Übersicht des Gesamtsystems der Erfindung mit einer Erweiterung für Mobilfunknetze zeigt; und
- **Fig. 9**: eine schematische Übersicht des Gesamtsystems der Erfindung beim Einsatz in einem Telefonnetz, bei dem die Teilnehmervermittlung ausgelagert ist, zeigt.

### Wege zur Ausführung der Erfindung

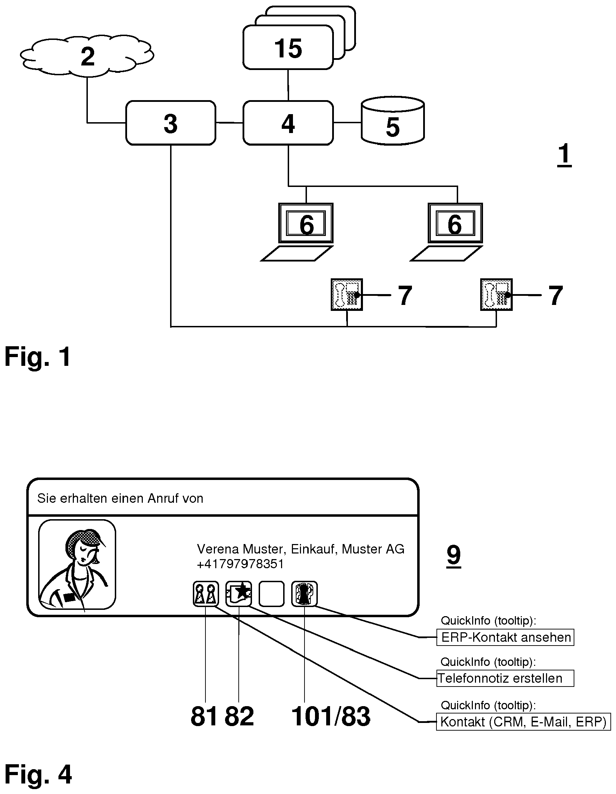

Das erfindungsgemässe System 1 wird schematisch in einem ersten Ausführungsbeispiel in der Fig. 1 dargestellt. Eine Vermittlungsanlage 3 ist mit einem Telekommunikationsnetz 2, beispielsweise einem Telefonfestnetz, verbunden. Alle Anrufe einer Firma werden über die Vermittlungsanlage 3 von und zu den einzelnen Telefonen geleitet. Die Telefone 7 befinden sich beispielsweise an den einzelnen Arbeitsplätzen der Firma. Es ist auch denkbar, dass die Anrufe vom Empfang der Firma angenommen werden und manuell an die einzelnen Telefone 7 weitergeleitet werden. Die Vermittlungsanlage 3 ist mit einem Server 4 verbunden, auf dem erfindungsgemäss eine Software zur Durchführung des erfindungsgemässen Verfahrens gespeichert ist und auf welchem diese abläuft. Der Server 4 ist mit einer Datenbank 5 verbunden. Beide Elemente Server 4 und Datenbank 5 können in einem oder auf getrennten Servern vorhanden sein. Externe Anwendungen 15 auf die die einzelnen Benutzer zugreifen und diese verwenden können, sind im Server 4 oder auf einem anderen internen oder externen Server, der mit diesem Server 4 verbunden ist, vorhanden. Es ist auch denkbar, dass auf die externen Anwendungen 15 über das Internet zugegriffen wird. Im Prinzip können im Rahmen der Erfindung mehrere Vermittlungsanlagen 3 auf eine Datenbank 5 zugreifen.

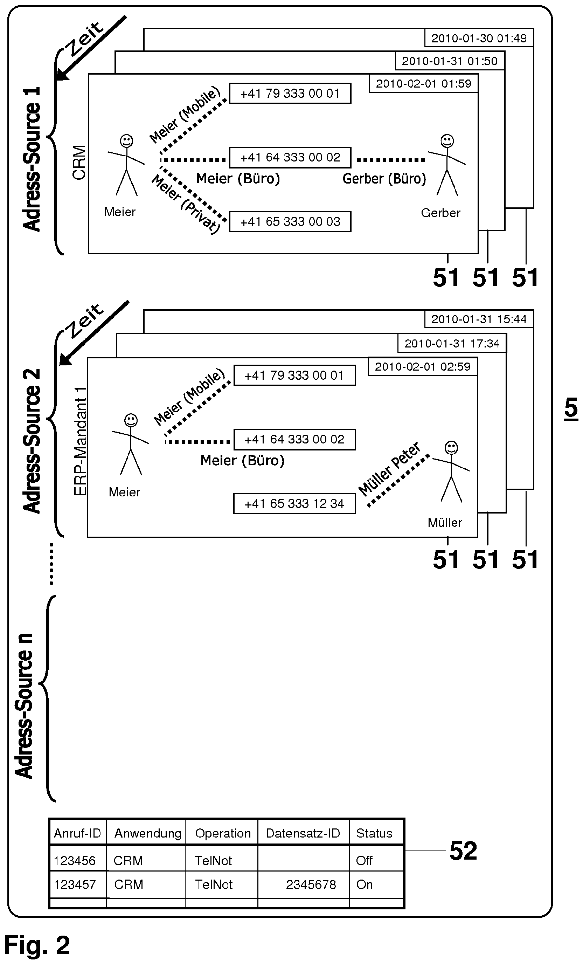

Fig. 2 illustriert die Kontaktdaten 51 aus den externen Anwendungen 15 (z.B. Kunden und Lieferanten der Firma), die in die Datenbank 5 übernommen und dort abgespeichert sind. Die Fig. 2 stellt an einem Beispiel dar, wie Kontaktdaten 51 abgebildet werden. Die Fig. 2 ist stark vereinfacht und zeigt nur Telefonnummer, Bezeichnung (z.B. "Meier (Mobile)") und Übermittlungsdatum (Datum der Übermittlung von der externen Anwendung 15 zum Server 4). Allgemein können die Datensätze für eine bestimmte Kombination von Kontakt/Telefonnummer folgende Elemente umfassen:
- Identifikation (für die eindeutige Identifikation des Datensatzes), bestehend aus Elementen (nach Bedarf) wie
   ∘ Datensatz-Id
   ∘ Organisations-Id
   ∘ Person-Id
   ∘ Mandant-Id
   ∘ Telefon-Typ (z.B. Festnetz, Mobiltelefon)
- Telefonnummer oder SIP-Adresse, Beispiele: +41628348100 kull@cetis.ch
- E-Mail-Adresse
- Display String als Text (oder in HTML), Beispiel: Kull, W. [direkt], Cetis AG, Aarau
- Zeitlicher Gültigkeitsbereich
- Datum Ersterfassung und Datum der letzten Änderung
- Bild
- Strukturierte Daten nach Bedarf, Elemente wie
   ∘ Vorname
   ∘ Name
   ∘ Firma
   ∘ Adresse
   ∘ Ort
   ∘ Postleitzahl
   ∘ Land
- Angabe, welche Benutzer den Kontakt 'sehen' dürfen
- Angabe, welche Benutzer den Kontakt mit dem Vornamen ansprechen dürfen.

Zu einer bestimmten Telefonnummer kann es mehrere Datensätze geben, z.B. dann wenn es sich um die Hauptnummer eines Unternehmens handelt, oder wenn sich mehrere Personen eine Telefonnummer teilen.

Mit dem Begriff 'Adress-Source' in Fig. 2 sind die Daten einer externen Anwendung 15 gemeint bzw. die Daten eines Mandanten einer externen Anwendung, falls es sich um eine mandantenfähige, externe Anwendung handelt. Beispielhaft ist in Fig. 2 die Adress-Source 1 mit einer CRM-Anwendung verbunden, und Adress-Source 2 mit dem Mandanten 1 einer ERP-Anwendung (Enterprise Resource Planning, "Planung [des Einsatzes/der Verwendung] der Unternehmensressourcen").

Als externe Anwendungen 15 werden hier alle Computer-Programme oder auch Geräte genannt, die in Verbindung zur CTI-Software stehen, aber nicht die CTI-Software selbst sind. Beispiele von externen Anwendungen 15 sind: CRM- und ERP-Anwendungen, private/öffentliche Telefonverzeichnisse (z.B. "TwixTel"), E-Mail-Programme oder auch Teilnehmervermittlungsanlagen. Die erfindungsgemässe Lösung kann die in der Vermittlungsanlage gespeicherten Teilnehmernamen aus der Vermittlungsanlage herauslesen und diese Daten (oder allgemein Kontakte) dann verwenden als würden sie aus einer externen Software-Anwendung 15 stammen.

Es werden bei Bedarf auch veraltete Daten in der Datenbank 5 aufbewahrt. 'Veraltete' Daten werden dann benötigt, wenn Informationen zu einem früheren Anruf benötigt werden. Beispiel: Die Telefonnummer +41 64 111 1111 gehörte bis zum 31.12.2008 Herrn Meier, und nach dem 31.12.2008 gehörte sie Herrn Müller. Die Datenbank 5 ist eine Kombination aus a) einem Cache für die aktuellen Daten aus den externen Anwendungen und b) einem Archiv mit dem zeitlichen Verlauf von solchen veralteten Daten, die für die korrekte Anzeige von Daten aus früheren Anrufen notwendig sind.

Nebst den in Fig. 2 gezeigten Kontaktdaten 51 wird in der Datenbank 5 auch eine Tabelle 52 geführt, welche die Status von Daten aus externen Anwendungen 15 abbilden kann, damit der Benutzer mittels unterschiedlicher Gestaltung (oder auch durch Nichtvorhandensein) des Symbols über den jeweiligen Zustand des referenzierten Datensatzes informiert werden kann.

Im einfachsten Fall wird die Gesamtheit der Kontaktdaten in regelmässigen Abständen von der externen Anwendung 15 an die Datenbank 5 übermittelt. Die Software kann aber auch jederzeit einzelne oder mehrere Datensätze entgegennehmen, um nicht auf die nächste Übermittlung der Gesamtdaten warten zu müssen. Generell kann die Datenübernahme automatisch passieren (im Sinne eines Updates) oder durch den Benutzer manuell gesteuert sein. Die Daten werden historisiert, d.h. jeder Datensatz hat einen Gültigkeitsbereich (von Datum/Zeit, bis Datum/Zeit). Die Software erkennt bei der Übernahme diejenigen Datensätze, die seit der letzen Übernahme nicht verändert wurden, und speichert diese nicht neu ab, sondern passt nur gegebenenfalls das Gültigkeitsdatum an.

Entsprechend der vorliegenden Erfindung werden bei einem Anruf dessen Identifikationsdaten (beteiligte Telefonnummern, Datum/Zeit) in dem Server 4 von der Vermittlungsanlage 3 empfangen und registriert. Danach werden aufgrund dieser Daten in der Datenbank 5 die für diesen Anruf relevanten Datensätze, die in den externen Anwendungen 15 vorhanden sind, identifiziert, und die auf diesen Datensätzen möglichen Operationen eruiert.

Die so identifizierten Operationen, externen Anwendungen 15 und Datensätze werden zu entsprechenden Operationsaufrufen 101 zusammengestellt.

Die Identifikation dieser Daten und die Zusammenstellung der Operationsaufrufe 101 kann sowohl bei Beginn wie auch nach Beendung eines Anrufs geschehen. Bei Beendung des Anrufs wird auch die Verbindungsdauer als weiteres Kriterium berücksichtigt. Somit kann beispielswiese einem Benutzer ein bestimmter Operationsaufruf 101 immer nur dann zur angezeigt werden, wenn der Anruf mehr als fünf Minuten dauerte.

Weiter können Operationsaufrufe 101 auch aufgrund der Telefonnummern alleine und unabhängig von einem bestimmten Anruf identifiziert werden. Dies wird beispielsweise dazu verwendet, um dem Benutzer Operationsaufrufe zu irgendeiner Telefonnummer anzeigen zu können. Diese nun identifizierten Operationsaufrufe werden als vom Benutzer auswählbare Symbole 101 auf dem Bildschirm des Benutzers dargestellt.

Mehrere Operationsaufrufe 101 können thematisch zusätzlich zu Operationsaufruf-Paketen 81 - 86 zusammengefasst werden. Welche Operationsaufrufe 101 zu Operationsaufruf-Paketen 81 - 86 zusammengefasst werden, ist nach den Bedürfnissen des Benutzers frei konfigurierbar. Beispielsweise ist es denkbar, dass gleiche Operationen innerhalb von verschiedenen externen Anwendungen 15 zusammenfasst oder verschiedene Operationen innerhalb einer externen Anwendung 15. Andere thematischen oder sinnvollen Zusammenfassungen sind möglich. Auch Operationsaufruf-Pakete werden als vom Benutzer auswählbare Symbole 81 - 86 auf dem Bildschirm des Benutzers dargestellt. Operationsaufrufe wie auch Operationsaufruf-Pakete können als auswählbare Symbole nebeneinander auf dem Bildschirm dargestellt werden.

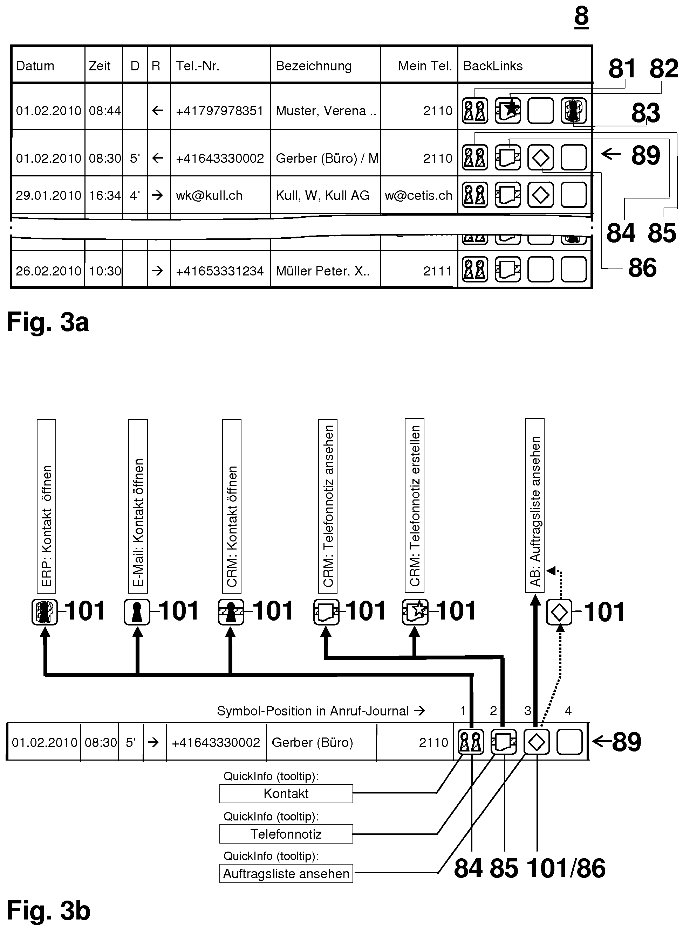

Fig. 3 - 7 stellen Beispiele von erfindungsgemässen Anzeigen dar, die dem Benutzer auf seinem Arbeitsplatzcomputer 6 dargestellt werden.

Fig. 3a stellt in einem Anruf-Journal 8 die registrierten Anrufe dar. Verschiedene Zeilen 89 geben dabei verschiedene Anrufe mit Datum des Anrufs, Anrufdauer, Anrufrichtung, Name, Telefonnummer sowie den beteiligten Anschluss des Benutzers und die Symbole mit identifizierten Operationsaufrufen 101 oder Operationsaufruf-Paketen 81 - 86 zu den Identifikationsdaten des Anrufers bzw. Angerufenen. Die angegebenen Daten können nach diesem Kriterien sortiert und gruppiert werden. Prinzipiell ermöglicht das erfindungsgemässe Verfahren aber auch Symbole 81-86, 101 an anderer Stelle, insbesondere im Zuordnungsmanager 16, im bei einem Anruf spontan eingeblendeten Fenster 9 oder in einem Adressbuch, in dem Identifikationsdaten eines Telefonteilnehmers gespeichert werden. Für jede dieser Stelle können unterschiedliche, durch Symbole 81-86, 101 repräsentierte Operationsaufrufe und Operationsaufruf-Pakete konfiguriert werden können.

Fig. 3b stellt schematisch eine Zeile 89 (ein Anruf) in dem Anruf-Journal 8 die konfigurierte Verknüpfung von drei Symbolen 84, 85, 101/86 mit sechs verschiedenen Operationen in vier externen Anwendungen 15 dar. Für das Symbol "Kontakt" 84 sind drei verschiedene Operationen (Kontakt in ERP, E-Mail oder CRM öffnen) verbunden, für das Symbol "Telefonnotiz" 85 zwei verschiedene Operationen (CRM Telefonnotiz ansehen oder erstellen), für das Symbol 101/86 "Auftragsliste ansehen" eine Operation.

Obwohl das erfindungsgemässe Verfahren im Wesentlichen mit Telefonnummern oder SIP-Adressen als Identifikationsdaten beschrieben wird, ist es denkbar, dass E-Mail-Adressen verwendet werden und die Darstellung der Symbole 81-86, 101 in einem E-Mail-Programm (Outlook, etc.) geschieht. Die tabellarische Auflistung, wie für das Anruf-Journal 8 in Fig. 3a dargestellt, gilt im gleichen Masse. Verschiedene Zeilen im E-Mail-Programm geben dabei verschiedene E-Mails mit Datum, Name, Anhang der E-Mail, etc. wieder und die Symbole stellen die identifizierten Operationsaufrufe 101 oder Operationsaufruf-Pakete 81 - 86 zu der E-Mailadresse dar. Die angegebenen Daten können nach diesem Kriterien sortiert und gruppiert werden. Durch diese Erweiterung kann ein ankommendes oder abgehendes E-Mail bezüglich Verknüpfung mit Daten (z.B. Kontakten) aus anderen Computer-Programmen gleich wie in einer CTI-Lösung behandelt werden. Telefonanrufe verwenden die Telefonnummer oder SIP-Adresse für die Identifikation des Anrufenden oder des Angerufenen, E-Mail-Übermittlungen verwenden die E-Mail-Adresse für die Identifikation des Absenders oder Empfängers.

Fig. 4 stellt ein Fenster dar, welches bei einem ankommenden Anruf eingeblendet wird. Die Symbole 81, 82, 101/83 werden unterhalb des Namens und der Telefonnummer angezeigt.

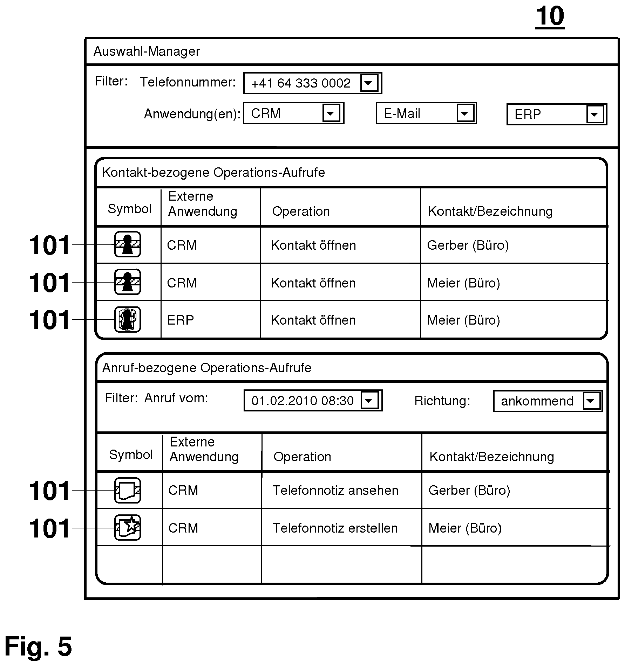

Fig. 5 zeigt das Dialogfenster des erfindungsgemässen Auswahlmanagers 10. Der Auswahlmanager 10 zeigt mehrere von Benutzer auswählbare Operationsaufrufe 101, die aufgrund der übermittelten Identifikationsdaten des anrufenden bzw. angerufenen Teilnehmers zusammengestellt wurden, an. Allgemein kann der Auswahlmanager 10 die auswählbaren Operationen als kontaktbezogen (oberer Bereich des Auswahlmanagers 10) und anrufbezogen (unterer Bereich des Auswahlmanagers 10) anzeigen. Der Auswahlmanager 10 ist zusammen mit der Datenübernahme aus den externen Anwendungen 15 so konzipiert, dass in der Software der externen Anwendung 15 keine oder nur wenig Ergänzungen nötig sind. Der Auswahl-Manager 10 wird dann und nur dann aufgerufen, wenn für das dem Benutzer ausgewählten Symbol 81 - 86 von der CTI-Software mehr als ein Operationsaufruf 101 eruiert wurde. Der Benutzer kann dann aus den Vorschlägen die richtige Auswahl treffen. Wie im Auswahlmanagers 10 sichtbar, können automatisch gesetzte Filterkriterien für Identifikationsdaten, externe Anwendungen 15 und einen Zeitpunkt vom Benutzer manuell eingeschränkt, erweitert bzw. allgemein verändert werden. Der Auswahlmanager 10 stellt Informationen und Steuerelemente in einem einzigen Fenster derart dar, dass erfindungsgemäss folgende Vorteile daraus erwachsen:
- Da oft mehrere Personen mit der gleichen Telefonnummer anrufen, werden alle Datensätze, die dieser Telefonnummer zugeordnet sind, angezeigt. Dies kann beispielsweise vorteilhaft sein, wenn immer nur die Hauptnummer des anrufenden Unternehmens angezeigt wird. Der Benutzer hat die Möglichkeit, so den richtigen Kontakt auszuwählen.
- Dem Benutzer werden alle externen Anwendungen 15 angezeigt, in welchen die Telefonnummer definiert ist. Der Benutzer hat die Möglichkeit, so die gewünschte Anwendung auszuwählen.
- Für bestimmte externe Anwendungen sind verschiedene Operationen möglich. Beispiele solcher Operationen sind:
   ∘ Stammdaten des Anrufenden in der ERP-Anwendung anzeigen;
   ∘ offene Angebote an den Anrufenden bzw. Angerufenen in der CRM-Anwendung anzeigen;
   ∘ vom Anrufenden erhaltene Bestellungen im letzten Jahr in der Auftragsbearbeitungsanwendung öffnen;
   ∘ offene Supportanfragen vom Anrufenden in der CRM-Anwendung ansehen;
   ∘ zu einem Anruf gehörende Telefonnotiz in der CRM-Anwendung anzeigen;
   ∘ Neue Telefonnotiz zu einem Anruf in der CRM-Anwendung erstellen;
   ∘ Transportaufträge für einen anrufenden oder angerufenen Fahrer anzeigen;
   ∘ Wählen einer Telefonnummer;
   ∘ Senden eines E-Mails oder SMS an den Anrufer oder den Angerufenen, mit teilweise vorgefertigtem Text, um den Anruf zu bestätigen;
   ∘ Erstellen eines E-Mails mit den Randdaten (Telefonnummer, Datum, Name) des Anrufers oder Angerufenen, um eine Drittperson über den Anruf zu informieren;
   ∘ Anwendungsübergreifende Anzeige, wer von der eigenen Firma wann und wie lange mit dem Anrufenden bzw. Angerufenen telefoniert hat;
   ∘ etc.

   Dem Benutzer wird so eine Liste aller zu einem bestimmten Anruf und/oder zu einem bestimmten Kontakt zur Verfügung stehenden Operationsaufrufe angezeigt.

Der Auswahlmanager 10 kann die zur Verfügung stehenden Operationsaufrufe benutzerspezifisch eruieren und anzeigen. Auf diese Weise werden nicht alle Operationsaufrufe angezeigt, sondern nur solche, die Operationen und externe Anwendungen betreffen, die a priori für den Benutzer von Interesse sind und auch nur solche, für welche er die entsprechenden Rechte hat, die aufgerufenen Daten zu sehen oder zu ändern.

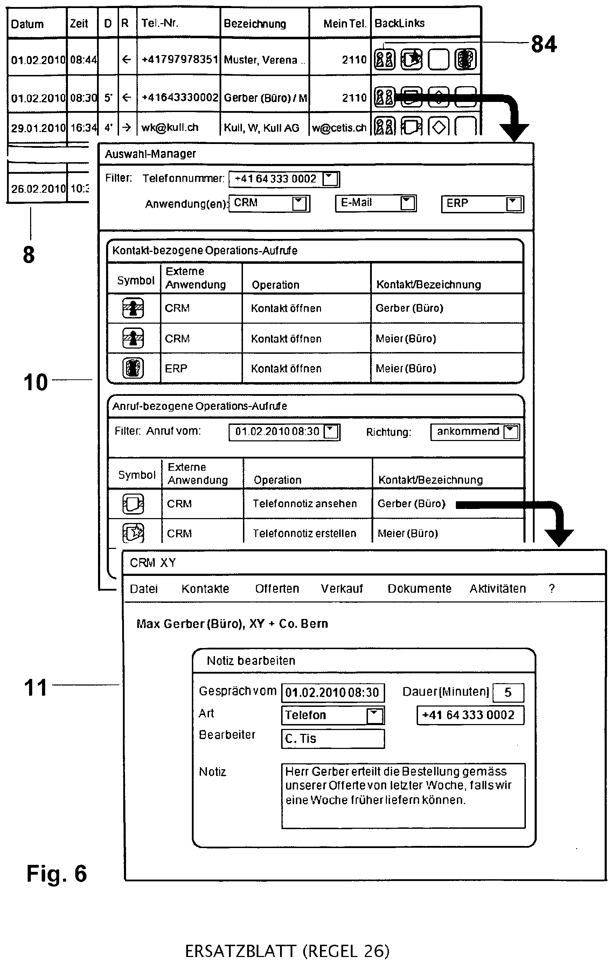

Fig. 6 illustriert das indirekte Öffnen einer Kontaktmaske 11 einer externen Anwendung 15. Beispielhaft wählt der Benutzer aus dem Anruf-Journal 8 das Symbol 84 und der Auswahlmanager 10 wird geöffnet. Anschliessend wählt der Benutzer im Auswahl-Manager 10 den gewünschten Operationsaufruf 101 aus, und die Kontaktmaske 11 mit Daten des Anrufenden wird angezeigt.

Wenn zu einer gegebenen Telefonnummer kein Kontakt in einer bestimmten externen Anwendung gefunden werden kann, heisst das noch nicht, dass der Kontakt in dieser externen Anwendung nicht erfasst ist. Es kann sein, dass diese Telefonnummer nicht oder falsch erfasst wurde. In der Praxis wird man vor dem Erfassen eines neuen Kontakts immer aufgrund anderer Kriterien (z.B. Name, Ort usw.) als der Telefonnummer überprüfen, ob ein Kontakt bereits existiert. Es sind drei Lösungen üblich:
- Manuell: Der Benutzer prüft innerhalb der externen Anwendung, ob er den Kontakt erstellen muss, oder ob er nur die Telefonnummer ergänzen bzw. korrigieren soll. Er führt die notwendige Aktion innerhalb der externen Anwendung durch.
- Die Maske für das Erstellen eines neuen Kontakts wird ohne irgendwelche Überprüfungen automatisch geöffnet;
- Die CTI-Lösung delegiert die Überprüfung an die externe Anwendung, indem sie über eine separate Schnittstelle zur externen Anwendung die Suchparameter übergibt.

Dem Benutzer will man dabei helfen, herauszufinden, ob der Anrufer bereits in der betroffenen externen Anwendung doch schon vorhanden ist und nur die Telefonnummer eingefügt werden soll, oder ob der Anrufer in einer anderen externen Anwendung aufgrund der gegebenen Telefonnummer eruiert werden kann; und dabei helfen die Erfassung der Daten zu vereinfachen, indem allenfalls aus anderen externen Anwendungen bekannte Daten (Name, Adresse) bei der Neueröffnung des Kontakts in die betroffene externe Anwendung übergeben werden.

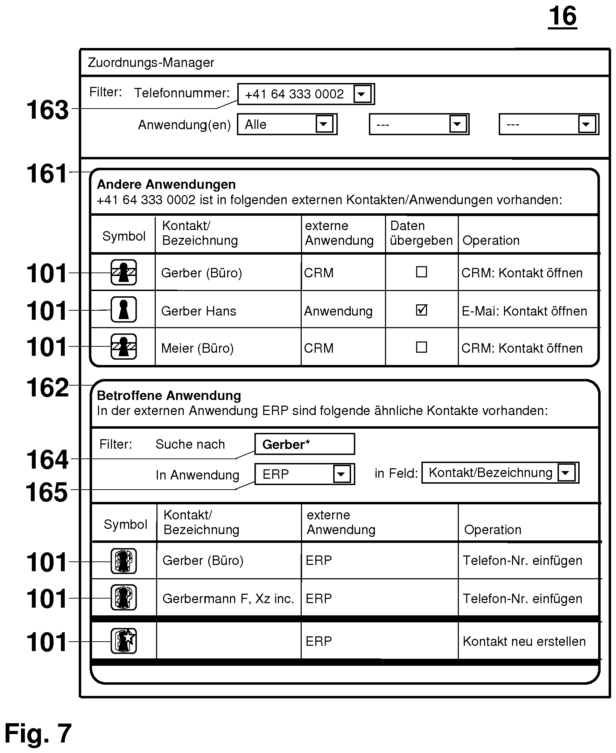

Die erwähnten Hilfestellungen können mittels des erfindungsgemässen Zuordnungsmanagers 16 erreicht werden. Fig. 7 zeigt ein Beispiel eines solchen Zuordnungsmanagers 16. Im Bereich "Andere Anwendungen" 161 werden für die betroffene Telefonnummer 163 diejenigen Operationsaufrufe 101 automatisch aufgelistet, die für andere externe Anwendungen eruiert wurden. Im anderen Bereich "betroffene Anwendung" 162 kann der Benutzer aufgrund von Suchkriterien 164 nach ähnlichen Kontakten in der betroffenen externen Anwendung 165 suchen und sich die dazu eruierten Operationsaufrufe 101 anzeigen zu lassen. Falls der gesuchte Kontakt in der Liste 162 (ohne die betroffene Telefonnummer) vorhanden ist, kann der Benutzer den Operationsaufruf "Telefon-Nr. einfügen" aktivieren, und der in diesem Operationsaufruf definerte Datensatz wird in der betroffenen externen Anwendung angesprochen und die betroffene Telefonnummer wird übergeben. Falls der gesuchte Kontakt nicht in einem der Operationsaufrufe im Bereich "betroffene Anwendung" 162 vorhanden ist, aber im Bereich "Andere Anwendungen" 161 aufgeführt ist, kann der Benutzer einen neuen Kontakt in der externen Anwendung erstellen, in dem er zuerst in der Liste "Andere Anwendungen" 161 den gefundenen Datensatz auswählt aus dem er die Daten an den neuen Kontakt übergeben möchte und dann den Operationsaufruf "Kontakt neu erstellen" aktiviert. Danach wird der neue Kontakt mit den Daten des vorher ausgewählten Kontakts erstellt.

Zumindest, wenn man herausfinden will, ob der Anrufer in der betroffenen Anwendung doch schon (ohne die betroffene Telefonnummer) bekannt ist, oder in einer anderen externen Anwendung 15 (mit der betroffenen Telefonnummer) bekannt ist, sind keine Anpassungen in der externen Anwendung 15 notwendig. Die Erfindung besteht darin, dass die Software die externe Anwendung nicht anfragen muss, ob bereits ein Kontakt mit diesem Namen (und auch anderen Daten ausser der Telefonnummer) besteht oder nicht. Bei der Übergabe der Kontaktdaten von der externen Anwendung werden alle Datensätze der Kontakte in die Datenbank 5 übernommen und nicht nur solche, die eine Telefonnummer beinhalten. Der Zuordnungsmanager 16 hat dann alle benötigten Daten zur Verfügung, um dem Benutzer die hilfreichen Vorschläge zu machen.

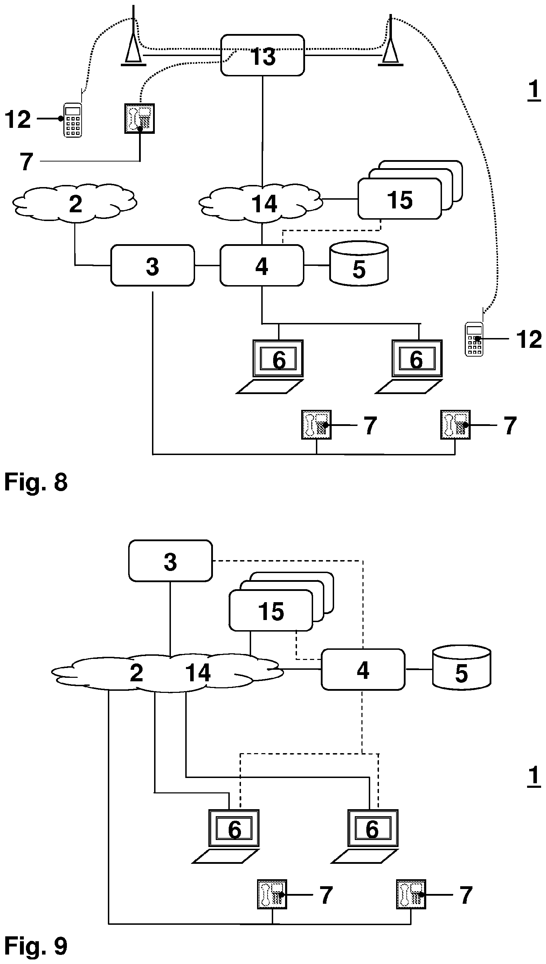

Fig. 8 zeigt eine schematische Übersicht des Gesamtsystems der Erfindung mit einer Erweiterung für Mobilfunknetze. In diesem Fall wird der interne Mitarbeiter auf seinem Mobiltelefon 12 erreicht. Der externe Anrufer verwendet irgendein Telefon, z.B. sein Mobiltelefon 12 oder einen Festnetzanschluss 7. Damit der Server 4 die Identifikationsdaten des externen Anrufers kennt, werden diese Daten über das Internet 14 (oder ein anderes Telekommunikationsnetz) von dem Mobilfunkanbieter 13 übermittelt. Damit kann das beschriebene erfindungsgemässe Verfahren in gleicher Weise auch bei Anrufen zu oder von dem Mobiltelefon des Benutzers funktionieren. Wie bereits für die Fig. 1 erwähnt kann es sein, dass die externen Anwendungen 15 über das Internet 14 abrufbar sind. Gestrichelt ist auch die Möglichkeit angedeutet, dass sie direkt mit dem Server 4 verbunden sind.

Fig. 9 zeigt eine schematische Übersicht des Gesamtsystems der Erfindung in einer Konfiguration für ein Telefonnetz 2, bei dem die Vermittlungsanlage 3 ausgelagert ist (wie z.B. bei "IP Centrex"). Diese Vermittlungsanlage 3 wird in diesem Fall von einem externen Dienstanbieter betrieben, wobei der Telefonverkehr der Firma über diese aus Firmensicht externe Vermittlungsanlage 3 geleitet wird. Der CTI-Server 4 kann direkt mit den Computern 6 der Benutzer oder indirekt über das Internet 14 (oder ein anderes Telekommunikationsnetz) mit den Computern 6 der Benutzer verbunden sein. Die externen Anwendungen 15 können direkt mit dem Server 4 verbunden sein oder ebenfalls nur über das Internet verfügbar sein. Der Server 4 ist wiederum direkt oder indirekt mit der Vermittlungsanlage 3 verbunden. Diese alternativen Optionen sind gestrichelt eingezeichnet.

Damit kann das beschriebene erfindungsgemässe Verfahren in gleicher Weise auch mit einem Telefonnetz, bei dem die Teilnehmervermittlung 3 ausgelagert ist funktionieren.

Dank den angezeigten Symbolen der möglichen Operationen und dem Auswahlmanager hat der Benutzer vorteilhaft auf intuitive Art eine Verbindung zu den externen Anwendungen 15:
a) Der Benutzer hat auf einfache Art die Übersicht, welche Operationen auf welchen Datensätzen in welchen externen Anwendungen ihm für den aktuellen und für frühere Anrufe zur Verfügung stehen (z.B. Telefonnotiz für den momentanen Anruf im CRM erfassen oder Telefonnotiz eines früheren Anrufs im CRM ansehen).
b) Der Benutzer kann auf Mausklick (oder anderen Bedienungseingriff, Tastatur, Touchscreen, Spracheingabe, etc.) eine dieser Operationsaufrufe aktivieren.
c) Der Benutzer hat auf einfache Art die Übersicht, welche Kontakte einer bestimmten Telefonnummer zugeordnet sind und in welchen externen Anwendungen diese Kontakte verzeichnet sind.
d) Der Benutzer kann auf einfache Art für einen bestimmten Anruf sehen, in welchem Status sich eine gewisse Funktion befindet (z.B. ob für diesen Anruf bereits eine Gesprächsnotiz erfasst wurde oder nicht).

Die vorliegende Erfindung bezieht sich auf ein entsprechendes System zur Auswahl einer Operation an Datensätzen aus externen Anwendungen in Abhängigkeit von Identifikationsdaten eines Telekommunikations-Teilnehmers und Computerprogrammprodukt entsprechend den angehängten Ansprüchen.

Um das erfindungsgemässen Verfahren durchzuführen ist der Server mit einer entsprechenden Software zur Durchführung der einzelnen Verfahrensschritte ausgestattet: Mittel zum Empfang von Identifikationsdaten des Telekommunikations-Teilnehmers in dem Server 4; Mittel zur Identifizierung von Operationsaufrufe 101 externer Anwendungen 15, die mit den benannten Identifikationsdaten verbunden sind; Mittel zur Zusammenfassung der identifizierten Operationsaufrufe 101 und Mittel zur Darstellung der zusammengefassten Operationsaufrufe 101 als mindestens eines vom Benutzer auswählbares Symbol 81-86 auf dem Bildschirm des Benutzers; und Mittel zur Auswahl eines des mindestens einen Symbols 81-86 durch den Benutzer, wobei nach der Auswahl ein Auswahlmanager 9 anzeigbar ist, der mehrere von Benutzer auswählbare Operationsaufrufe 101 anzeigt.

### Bezugszeichenliste

- 1: System
- 2: Telekommunikationsnetz
- 3: Vermittlungsanlage
- 4: Server
- 5: Datenbank
- 51: Kontaktdaten
- 52: Tabelle für Statusverwaltung
- 6: Computer
- 7: Telefon
- 8: Anruf-Journal
- 81, 82, 83, 84, 85, 86: Operationsaufruf-Paket / Symbol
- 89: Zeile im Anruf-Journal
- 9: Fenster bei einem Anruf
- 10: Auswahlmanager
- 101: Operationsaufruf / Symbol
- 11: Kontaktmaske einer externen Anwendung
- 12: Mobiltelefon
- 13: Mobilfunkanbieter
- 14: Internet
- 15: externe Anwendungen
- 16: Zuordnungsmanager
- 161: Bereich "andere Anwendungen"
- 162: Bereich "betroffene Anwendungen"
- 163: betroffene Telefonnummer
- 164: Suchkriterien
- 165: betroffene Anwendung

## Patentansprüche

1. Computergestütztes CTI-Verfahren zur Auswahl und zum Aufruf externer Anwendungen (15) in Abhängigkeit von Identifikationsdaten eines Telekommunikations-Teilnehmers, wobei das System einen Server (4), mit dem Server (4) verbundene Computer (6) der Benutzer und eine Datenbank (5) mit den Datensätzen aus einer Vielzahl von externen Anwendungen (15) aufweist, wobei der Server (4) auf die externen Anwendungen (15) Zugriff hat, **gekennzeichnet durch** folgende Verfahrensschritte
• Identifikationsdaten des Telefonteilnehmers werden in dem Server (4) empfangen;
• Operationsaufrufe (101) externer Anwendungen (15), die mit den benannten Identifikationsdaten verbunden sind, werden in der Datenbank (5) identifiziert, wobei
• mehrere Operationsaufrufe (101) werden zusammengefasst und als mindestens ein vom Benutzer auswählbares Symbol (81-86) auf dem Bildschirm des Benutzers dargestellt; und
• eines des mindestens einen Symbols (81-86) wird durch den Benutzer ausgewählt wird, wobei nach der Auswahl ein Auswahlmanager (10) angezeigt wird, der mehrere von Benutzer auswählbare Operationsaufrufe (101) anzeigt.

2. Verfahren gemäss Anspruch 1, **dadurch gekennzeichnet, dass** im Auswahlmanager (10) in einer einzigen Ansicht aufgrund der Identifikationsdaten alle identifizierten Operationen (101) auf allen identifizierten Kontakten aller identifizierten externen Anwendungen (15) gezeigt werden.

3. Verfahren gemäss Anspruch 1, **dadurch gekennzeichnet, dass** der Auswahlmanager (10) Operationsaufrufe (101) durch Symbole repräsentierte Operationen benutzerspezifisch auswählt und anzeigt.

4. Verfahren gemäss einem der Ansprüche 1 bis 3, **dadurch gekennzeichnet, dass** im Auswahlmanager (10) automatisch gesetzte Filterkriterien für eine Identifikationsdaten, externe Anwendungen (15) und einen Zeitpunkt vom Benutzer manuell eingeschränkt oder erweitert werden können.

5. Verfahren gemäss einem der Ansprüche 1 bis 4, **dadurch gekennzeichnet, dass** pro externe Anwendung (15) aufgrund von Identifikationsdaten mehr als ein passender Kontakt identifiziert wird oder Identifikationsdaten in mehreren externen Anwendungen (15) identifiziert werden.

6. Verfahren gemäss einem der Ansprüche 1 bis 5, **dadurch gekennzeichnet, dass** der Benutzer konfiguriert, welche Operationsaufrufe (101) zu einem auswählbaren Symbol zusammengefasst werden.

7. Verfahren gemäss einem der Ansprüche 1 bis 6, **dadurch gekennzeichnet, dass** zusätzlich einzelne Operationsaufrufe als auswählbares Symbol (101) dargestellt werden.

8. Verfahren gemäss einem der Ansprüche 1 bis 7, **dadurch gekennzeichnet, dass** bei einem Telefonanruf, eine bestimmte Dauer als Kriterium dient, ob dem Benutzer ein auswählbares Symbol dargestellt wird.

9. Verfahren gemäss einem der Ansprüche 1 bis 8, **dadurch gekennzeichnet, dass** die auswählbaren Symbole (81, 86, 101) in einem Anrufjournal (8), in bei einem ankommenden Anruf eingeblendeten Fenster (9), in einem E-Mailprogramm oder in einem Adressbuch wiedergegeben werden.

10. Verfahren gemäss einem der Ansprüche 1 bis 9, **dadurch gekennzeichnet, dass** als Operationsaufrufe (101) eines der folgenden Operationen auswählbar sind:
• Stammdaten eines Anrufenden oder Angerufenen anzeigen;
• offene Angebote an den Anrufenden anzeigen;
• vom Anrufenden erhaltene Bestellungen im letzten Jahr in der Auftragsbearbeitungsanwendung öffnen;
• offene Supportanfragen vom Anrufenden ansehen;
• zu einem Anruf gehörende Telefonnotiz anzeigen;
• neue Telefonnotiz zu einem Anruf erstellen;
• Transportaufträge für einen anrufenden oder angerufenen Fahrer anzeigen.
• Wählen einer Telefonnummer;
• Senden eines E-Mails oder SMS an den Anrufer oder den Angerufenen, mit teilweise vorgefertigtem Text, um den Anruf zu bestätigen;
• Erstellen eines E-Mails mit den Randdaten (Telefonnummer, Datum, Name) des Anrufers oder Angerufenen, um eine Drittperson über den Anruf zu informieren;
• Anwendungsübergreifende Anzeige, wer von der eigenen Firma wann und wie lange mit dem Anrufenden bzw. Angerufenen telefoniert hat;

11. Verfahren gemäss einem der Ansprüche 1 bis 10 **dadurch gekennzeichnet, dass** wenn die Identifikationsdaten (163) eines Telekommunikations-Teilnehmers in den externen Anwendungen (15) nicht gefunden wird, aufgrund anderer Suchkriterien (164) als den Identifikationsdaten ein passender Kontakt in den externen Anwendungen (15) gefunden wird und der Benutzer in einem Zuordnungsmanager (16) die Identifikationsdaten im gefundenen Kontakt einfügen lassen kann.

12. Verfahren gemäss einem der Ansprüche 1 bis 11, **dadurch gekennzeichnet, dass** wenn die Identifikationsdaten (163) eines Telekommunikations-Teilnehmers in den externen Anwendungen (15) nicht gefunden wird, und der Benutzer in einem Zuordnungsmanager (16) einen neuen Kontakt für die betroffene externe Anwendung (15) aufgrund der Identifikationsdaten eröffnet.

13. Verfahren gemäss einem der Ansprüche 11 oder 12, **dadurch gekennzeichnet, dass** aufgrund mit den Identifikationsdaten aufgerufenen Zuordnungsmanagers (16) automatisch gesetzten Filterkriterien für Identifikationsdaten und externe Anwendungen (15) vom Benutzer manuell verändert werden.

14. CTI System zur Auswahl einer Operation an Datensätzen aus externen Anwendungen (15) in Abhängigkeit von Identifikationsdaten eines Telekommunikations-Teilnehmers, wobei das System einen Server (4), mit dem Server (4) verbundene Computer (6) der Benutzer und eine Datenbank (5) mit den Datensätzen aus einer Vielzahl von externen Anwendungen (15) aufweist, wobei der Server (4) auf die externen Anwendungen (15) Zugriff hat, und weiter umfasst
• Mittel zum Empfang von Identifikationsdaten des Telekommunikations-Teilnehmers in dem Server (4);
• Mittel zur Identifizierung von Operationsaufrufe (101) externer Anwendungen (15), die mit den benannten Identifikationsdaten verbunden sind;
• Mittel zur Zusammenfassung der identifizierten Operationsaufrufe (101) und Mittel zur Darstellung der zusammengefassten Operationsaufrufe (101) als mindestens eines vom Benutzer auswählbares Symbol (81-86) auf dem Bildschirm des Benutzers; und
• Mittel zur Auswahl eines des mindestens einen Symbols (81-86) durch den Benutzer, wobei nach der Auswahl ein Auswahlmanager (9) anzeigbar ist, der mehrere von Benutzer auswählbare Operationsaufrufe (101) anzeigt.

15. Computerprogrammprodukt enthaltend einen Programmcode, der geeignet ist, um in einem Arbeitsspeicher eines Server (4) geladen zu werden, und die Verfahrensschritte eines der genannten Verfahren gemäss den Ansprüchen 1 bis 14 auszuführen, wenn es gestartet wird.

## Claims

1. Computer implemented CTI-Method for selecting and for opening external applications (15) in dependence of the identification data of a telecommunication participant, wherein the system comprises a server (4), computers (6) of users connected with said server (4) and a database (5) with data records from a plurality of external applications (15), **characterized by** the following method steps:
- identification data of the telephone participant are received in the server (4);
- command calls (101) of external applications (15) which are connected with the identification data are identified in the database (5),
- wherein several command calls (101) are united and displayed on the display of the user as at least one symbol (81-86) selectable for the user; and
- one of the at least one symbol (81-86) is selected by the user, wherein a selection manager (10) is shown after the selection which shows several command calls (101) selectable by the user.

2. Method according to claim 1, **characterized in that** all identified commands (101) of all identified contacts of all identified external applications (15) are shown in the selection manager (10) in a single view based on the identification data.

3. Method according to claim 1, **characterized in that** the selection manager (10) user-specifically selects and shows command calls (101) of operations represented by symbols.

4. Method according to one of claims 1 to 3, **characterized in that** filter criteria automatically set for identification data, external applications (15) and a time of the user can manually be restricted or extended in the selection manager (10).

5. Method according to one of claims 1 to 4, **characterized in that** more than one suitable contact is identified per external application (15) based on the identification data or identification data is identified in more external applications (15).

6. Method according to one of claims 1 to 5, **characterized in that** the user configures which command calls (101) are united to a selectable symbol (101).

7. Method according to one of claims 1 to 6, **characterized in that** additional single command calls are displayed as selectable symbol (101).

8. Method according to one of claims 1 to 7, **characterized in that** a determined duration is used as criterion at a phone call, if a selectable symbol is displayed to the user.

9. Method according to one of claims 1 to 8, **characterized in that** the selectable symbol (81, 86, 101) are displayed in a call journal (8), in a window shown with an incoming call, in an email program or in an address book.

10. Method according to one of claims 1 to 9, **characterized in that** one of the following commands are selectable as command calls (101):
- show basic data of a caller or a called person;
- show open offers to the caller;
- open orders received in the last year from the caller in the order processing application;
- look open support questions from the caller;
- show a phone notice belonging to a call;
- create new phone notice for a call;
- show transport orders for a calling or called driver;
- calling a phone number;
- sending of an email or SMS to a caller or to a called person with partly prefabricated text in order to confirm the call;
- create an email with data (phone number, date, name) of the caller or called in order to inform a third person about the call;
- a display across applications who of the own company called when and how long with the caller or the called person.

11. Method according to one of claims 1 to 10 **characterized in that**, if the identification data (163) of a telecommunications participant is not found in the external applications (15), a suitable contact as identification data is found in the external application (15) based on other search criteria and the user can make a association manager (16) insert the identification data in the found contact.

12. Method according to one of claims 1 to 11, **characterized in that**, if the identification data (163) of a telecommunications participant is not found in the external applications (15), the user opens in an association manager (16) a new contact for the corresponding external application (15) based on the identification data.

13. Method according to claim 11 or 12, **characterized in that** filter criteria for identification data and external applications (15) automatically set based on the association manager executed with the identification data (16) are changed manually by the user.

14. CTI-system for selecting a data base record command from external applications (15) in dependence of identification data of a telecommunication participant, wherein the system comprises a server (4), computers (6) of users connected with said server (4) and a database (5) with data records from a plurality of external applications (15), wherein the server (4) has access to the external applications (15), and comprises further:
- means for receiving identification data of the telecommunication participant in the server (4);
- means for identifying command calls (101) of external applications (15) which are connected with the identification data,
- means for uniting several command calls (101) and means for displaying on the display of the user as at least one symbol (81-86) selectable for the user; and
- means for selecting one of the at least one symbol (81-86) by the user, wherein a selection manager (10) is shown after the selection which shows several command calls (101) selectable by the user.

15. Computer program product comprising a program code which is configured to be loaded in the RAM of a server (4) and to execute the method steps of one of the methods according to claims 1 to 14, when the program is started.

## Revendications

1. Procédé informatisé de couplage téléphonie informatique (CTI, Computer Telephony Integration) pour sélectionner et appeler des applications externes (15) en fonction de données d'identification d'un abonné de télécommunication, ledit système comprenant un serveur (4), des ordinateurs (6) d'utilisateur connectés au serveur (4), et une base de données (5) avec des ensembles de données d'une pluralité d'applications externes (15), ledit serveur (4) ayant accès à des applications externes (15),
**caractérisé par** les étapes suivantes:
- les données d'identification de l'abonné de téléphone sont reçues dans le serveur (4);
- des appels d'opération (101) des applications externes (15) associés auxdites données d'identification sont identifiés dans la base de données (5), dans lequel
- une pluralité d'appels d'opération (101) sont combinés et affichés sur l'écran de l'utilisateur sous la forme d'au moins un symbole (81-86) sélectionnable par l'utilisateur; et
- un des au moins un symbole (81-86) est sélectionné par l'utilisateur, un gestionnaire de sélection (10) étant affiché après la sélection et affichant une pluralité d'appels d'opération (101) sélectionnables par l'utilisateur.

2. Procédé selon la revendication 1, **caractérisé en ce que** dans le gestionnaire de sélection (10), en raison des données d'identification, toutes les opérations identifiées (101) sur tous les contacts identifiés de toutes les applications externes identifiées (15) sont présentés dans un seul affichage.

3. Procédé selon la revendication 1, **caractérisé en ce que** le gestionnaire de sélection (10) sélectionne et affiche des appels d'opération (101) d'opérations représentés par des symboles de manière spécifique à l'utilisateur.

4. Procédé selon l'une quelconque des revendications 1 à 3, **caractérisé en ce que** des critères de filtrage définis automatiquement peuvent être limités ou étendus manuellement par l'utilisateur dans le gestionnaire de sélection (10) pour une donnée d'identification, des applications externes (15) et un point dans le temps.

5. Procédé selon l'une quelconque des revendications 1 à 4, **caractérisé en ce que** plus d'un contact approprié est identifié en fonction de données d'identification pour chaque application externe (15) ou que des données d'identification sont identifiées dans plusieurs applications externes (15).

6. Procédé selon l'une quelconque des revendications 1 à 5, **caractérisé en ce que** l'utilisateur configure quels appels d'opération (101) sont regroupés sous un symbole sélectionnable.

7. Procédé selon l'une quelconque des revendications 1 à 6, **caractérisé en ce que** des appels d'opération individuels sont par ailleurs représentés comme symbole sélectionnable (101).

8. Procédé selon l'une quelconque des revendications 1 à 7, **caractérisé en ce que** lors d'un appel téléphonique, une certaine durée de temps est utilisée comme critère pour déterminer s'il convient d'afficher à l'utilisateur un symbole sélectionnable.

9. Procédé selon l'une quelconque des revendications 1 à 8, **caractérisé en ce que** les symboles sélectionnables (81, 86, 101) sont représentés dans un journal d'appels (8), dans une fenêtre (9) superposée lors d'un appel entrant, dans un programme de courrier électronique, ou dans un carnet d'adresses.

10. Procédé selon l'une quelconque des revendications 1 à 9, **caractérisé en ce que** l'une des opérations suivantes est sélectionnable en tant qu'appel d'opération (101):
- afficher les données de base de l'appelant ou de l'appelé;
- afficher des offres ouvertes à l'appelant;
- ouvrir des commandes reçues de l'appelant au cours de la dernière année dans l'application de traitement des commandes;
- consulter les requêtes d'assistance en cours de l'appelant;
- afficher une note téléphonique associée à un appel;
- créer une nouvelle note de téléphone pour un appel;
- afficher des demandes de transport pour un conducteur appelant ou appelé;
- composer un numéro de téléphone;
- envoyer un e-mail ou SMS à l'appelant ou à l'appelé, au moyen d'un texte partiellement préparé, pour confirmer l'appel;
- créer un e-mail avec les données accessoires (numéro de téléphone, date, nom) de l'appelant ou de l'appelé, pour informer un tiers au sujet de l'appel;
- affichage inter-application pour savoir qui au sein de l'entreprise en question a téléphoné, quand et pendant combien de temps avec l'appelant ou l'appelé.

11. Procédé selon l'une quelconque des revendications 1 à 10, **caractérisé en ce que**, lorsque les données d'identification (163) d'un abonné de télécommunication n'est pas trouvé dans les applications externes (15), un contact approprié est trouvé dans les applications externes (15) sur la base d'autres critères de recherche (164) que les données d'identification, et l'utilisateur peut introduire dans un gestionnaire d'attribution (16) les données d'identification dans le contact trouvé.

12. Procédé selon l'une quelconque des revendications 1 à 11, **caractérisé en ce que**, lorsque les données d'identification (163) d'un abonné de télécommunication n'est pas trouvé dans les applications externes (15), l'utilisateur peut ouvrir dans un gestionnaire d'attribution (16) un nouveau contact pour l'application externe (15) en question sur la base des données d'identification.

13. Procédé selon l'une quelconque des revendications 11 ou 12, **caractérisé en ce que** des critères de filtrage définis automatiquement sur la base du gestionnaire d'attribution (16) appelé avec les données d'identification sont changés manuellement par l'utilisateur pour des données d'identification et des applications externes (15).

14. Système de couplage téléphonie informatique (CTI, Computer Telephony Integration) pour sélectionner une opération sur des ensembles de données d'applications externes (15) en fonction de données d'identification d'un abonné de télécommunication, dans lequel le système comprend un serveur (4), des ordinateurs (6) d'utilisateur connectés au serveur (4), et une base de données (5) avec des ensembles de données d'une pluralité d'applications externes (15), ledit serveur (4) ayant accès à des applications externes (15), et comprend en outre :
- des moyens pour recevoir des données d'identification de l'abonné de télécommunication dans le serveur (4) ;
- des moyens pour identifier les appels d'opération (101) d'applications externes (15) qui sont associés auxdites données d'identification ;
- des moyens pour combiner les appels d'opération (101) identifiés et des moyens pour représenter les appels d'opération (101) regroupés sous la forme d'au moins un symbole (81-86) sélectionnable par l'utilisateur sur l'écran de l'utilisateur ; et
- des moyens pour la sélection du au moins un symbole (81-86) par l'utilisateur, dans lesquels après la sélection un gestionnaire de sélection (10) peut être affiché qui affiche plusieurs appels d'opération (101) sélectionnables par l'utilisateur.

15. Produit logiciel informatique contenant un code de programme adapté pour être chargé dans une mémoire de travail d'un serveur (4) et d'exécuter les étapes de procédure d'une desdites procédures selon les revendications 1 à 14 lorsqu'il est démarré.
